# EUROPEAN PATENT SPECIFICATION

(11) **EP 3 335 863 B1**
(45) Date of publication and mention of the grant of the patent: **05.04.2023**
(21) Application number: 17207641.6
(22) Date of filing: 15.12.2017
(51) Int. Cl.: B29C 67/00, H04N 1/00, B33Y 50/02

(54) **3D PRINTING DATA GENERATION METHOD AND DEVICE**
3D-DRUCKDATENERZEUGUNGSVERFAHREN UND -VORRICHTUNG
PROCÉDÉ DE GÉNÉRATION DE DONNÉES D'IMPRESSION 3D ET DISPOSITIF

(30) Priority: 16.12.2016 CN 201611168444
(43) Date of publication of application: 20.06.2018
(73) Proprietor: Beijing Xiaomi Mobile Software Co., Ltd., Beijing 100085 (CN)
(72) Inventor: LIU, Huayijun, Beijing, 100085 (CN); CHEN, Tao, Beijing, 100085 (CN)
(74) Representative: Kudlek, Franz Thomas

(56) References cited:
- EP-A1- 2 930 008
- WO-A1-2016/178465
- CN-A- 105 459 405
- CN-U- 204 894 521
- US-A1- 2016 282 827

## Description

### TECHNICAL FIELD

The embodiments of the present invention generally relate to the technical field of image processing, and more particularly, to a Three-Dimensional (3D) printing data generation method and device.

### BACKGROUND

3D printing is a rapid prototyping technology, and is a technology for constructing an object on the basis of a digital model file in a layer-by-layer printing manner by using a bondable material such as powder metal or plastics.

3D printing is usually implemented by adopting a digital-technology-based material printer, was usually used for manufacturing a model in the fields of mold manufacture, industrial design and the like, and later, has gradually been used for directly manufacturing some products. There have been parts printed by virtue of such a technology. The technology is applied to jewelries, shoes, industrial design, buildings, Architecture Engineering and Construction (AEC), automobiles, the aerospace, the dental and medical industry, education, geographical information systems, civil engineering, guns and other fields.

The conventional 3D printing technology requires a designer to firstly create a model with Computer-Aided Design (CAD) or modeling software and then obtain "regional sections" of the created 3D model, thereby guiding the printer to perform layer-by-layer printing.

Document WO 2016/178465 A1 discloses a mobile terminal includes a main body, a display unit disposed on one surface of the main body, a 3D camera for capturing an image of a 3D shape disposed together with reference markers, a data forming unit for forming scan data, based on distances to the image from the reference markers included in the image, and a controller for controlling the display unit to output a scan image of the 3D shape, based on the scan data.

Document US2016282827 (A1) discloses a method for acquiring anatomical data from a particular horse, processing said data into appropriate fitting and sizing data for a saddle tree, and providing said processed data to a 3D printer for the creation of a custom fit saddle tree, using a mobile device to capture data from said horse and formatting the horse's data using proprietary algorithms, fuzzy logic, and heuristics.

Document EP2930008 (A1) discloses a control device for a 3D printer, the 3D printer including a supply unit configured to supply a forming material and a degradable agent, and a printing unit configured to print a 3D object. The control device includes a display unit, a controller and a communication unit. The display unit is configured to output screen information enabling a user to set a use period of the 3D object. The controller is configured to determine an amount of the degradable agent to be added to the 3D object based on the set use period and configured to generate a control signal for controlling the 3D printer, the control signal being indicative of the determined amount of the degradable agent. The communication unit is configured to transmit the control signal to the 3D printer.

Document CN105459405 (A) discloses a three-dimensional model data transfer device and method, and a three-dimensional printing system which is suitable for the three-dimensional model data transfer device. The three-dimensional model data transfer device comprises a data receiving unit, a data processing unit and a data transmitting unit, wherein the data receiving unit receives model data of varied format types; the data processing unit receives the model data transmitted from the data receiving unit and performs recognition treatment so as to generate a corresponding model printing file and store the generated model printing file; the data transmitting unit transmits the model printing file output from the data processing unit to one or more three-dimensional printers. The three-dimensional model data transfer device disclosed by the invention can receive varied three-dimensional model data format files, and three-dimensional model data is automatically converted into digital model files, so that users can conveniently perform batch three-dimensional printing.

Document CN204894521 (U) discloses a 3D printer system, includes control terminal and 3D printer, control terminal generates section data through data conversion module and data processing module's conversion with handling including the input device, 2D figure that is used for inputing the 2D figure, and control terminal recycles wireless sending module and will cut into slices data transmission and give the 3D printer, can realize utilizing control terminal control 3D printer to carry out the function that 3D printed, no longer need rely on PC, can utilize control terminal to draw at any time and print at any time, input device 0, raises the efficiency and convenience very. Control terminal can be smart mobile phone, panel computer and so on portable electronic products, therefore can be very convenient.

### SUMMARY

Accordingly, the present invention provides a 3D printing data generation method and device, in accordance with claims which follow.

The features of the method and system according to the present invention are defined in the independent claims, and the preferable features according to the present invention are defined in the dependent claims.

It is to be understood that the above general description and detailed description below are only exemplary and explanatory and not intended to limit the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a flow chart showing a 3D printing data generation method, according to an exemplary embodiment.
Fig. 2 is a flow chart showing a 3D printing data generation method, according to another exemplary embodiment.
Fig. 3 is a display diagram of smart glasses, according to an exemplary embodiment.
Fig. 4 is a flow chart showing a 3D printing data generation method, according to an exemplary embodiment.
Fig. 5 is a display diagram of smart glasses, according to another exemplary embodiment.
Fig. 6 is a block diagram of a 3D printing data generation device, according to an exemplary embodiment.
Fig. 7 is a block diagram of a recognition module, according to an exemplary embodiment.
Fig. 8 is a block diagram of a scanning module, according to an exemplary embodiment.
Fig. 9 is a block diagram of a 3D printing data generation device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

The technical solutions provided by the embodiments of the present invention relate to smart glasses. 3D data is acquired through the smart glasses, and a user does need to adopt professional modeling software for designing. Therefore, an acquisition difficulty and cost of the 3D printing data are reduced, and simplicity for an operation of the user is ensured, thereby reducing a use threshold of the 3D printing for ordinary users and improving user experiences in the smart glasses and 3D printing.

The smart glasses in the embodiments integrate at least one of the following sensors: an infrared sensor, an image recognition sensor and an ultrasonic ranging sensor, so that the smart glasses are endowed with a function of scanning a 3D object. Moreover, the smart glasses may establish connection with another device in a manner of BT, a wireless local area network and the like.

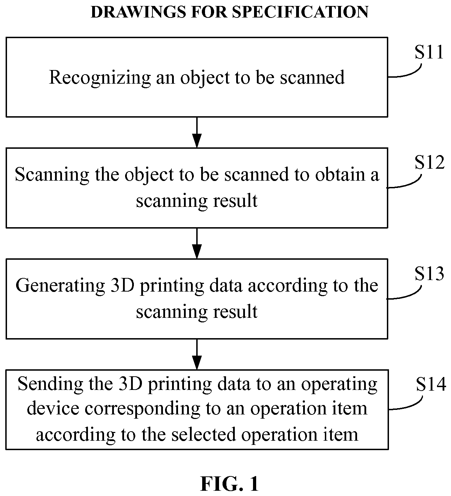

Fig. 1 is a flow chart showing a 3D printing data generation method, according to an exemplary embodiment. As shown in Fig. 1, the 3D printing data generation method is applied to smart glasses, and includes Steps S11-S14.

In Step S11, an object to be scanned is recognized.

In Step S12, the object to be scanned is scanned to obtain a scanning result.

In Step S13, 3D printing data is generated according to the scanning result.

In Step S14, the 3D printing data is sent, according to a selected operation item, to an operating device corresponding to the operation item.

In the embodiment, the smart glasses have a 3D scanning function, the object to be scanned is scanned through the smart glasses, the 3D printing data in a format supported by a 3D printer is generated from the scanning result, and the 3D printing data is sent to a specified operating device, such as the 3D printer, another user terminal or a cloud server, in a wireless manner. In such a manner, a user does not need to adopt professional modeling software for designing or adopt professional 3D scanning equipment for scanning. Therefore, an acquisition difficulty and cost of the 3D printing data are reduced, and simplicity for an operation of the user is ensured, thereby reducing a use threshold of the 3D printing for ordinary users and improving user experiences in the smart glasses and 3D printing.

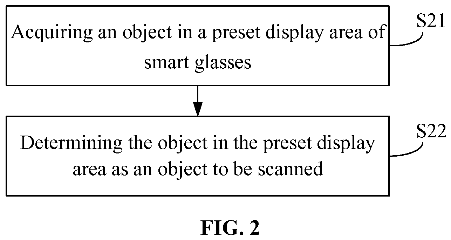

Fig. 2 is a flow chart showing a 3D printing data generation method, according to another exemplary embodiment. As shown in Fig. 2, in another embodiment, recognizing the object to be scanned includes Steps S21-S22.

In Step S21, an object in a preset display area of the smart glasses is acquired.

In Step S22, the object in the preset display area is determined as the object to be scanned.

In the embodiment, for avoiding acquisition of wrong 3D data due to scanning of an adjacent object during scanning, the object to be scanned is placed in a specific scanning area for scanning. Therefore, the user needs to place the object to be scanned in the preset display area of the smart glasses when scanning the object to be scanned through the smart glasses.

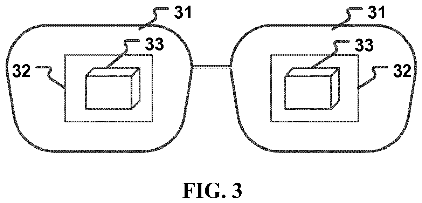

As shown in Fig. 3, when the user selects 3D scanning, a display window 32 appears in a display area 31 of the smart glasses, and the smart glasses merely scans an object in the display window 32. Therefore, the user needs to regulate a position or angle of the smart glasses to make the object 33 to be scanned positioned in the display window 32.

Therefore, the smart glasses may accurately scan the object to be scanned, and may not scan another object not required to be scanned in the user's sight. Thus, acquisition of wrong 3D scanning data is avoided, and 3D scanning accuracy is improved.

In another embodiment, the operation that the object to be scanned is scanned to obtain a scanning result includes:

the object to be scanned is scanned by adopting at least one of the following sensors in the smart glasses: an infrared sensor, an image sensor or an ultrasonic sensor.

Here, the infrared sensor is a sensor for performing measurement by virtue of the physical property of the infrared ray. The infrared sensor may be used for target detection, object positioning, distance measurement or the like. The image sensor is a photosensitive element, is a device for converting an optical image into an electronic signal, and is widely applied to digital camera and other electronic optical equipment. An electronic signal corresponding to an optical image of the object to be scanned may be obtained through the image sensor. The ultrasonic sensor is a sensor for converting an ultrasonic signal into a signal of another energy type (usually an electrical signal), and may be used to perform distance measurement on the object to be scanned.

In the embodiment, at least one of an infrared sensor, an image recognition sensor and an ultrasonic ranging sensor is integrated in the smart glasses to endow the smart glasses with a function of scanning a 3D object, namely acquiring data of a shape, structure, color and the like of the object to be scanned. The user, after wearing the smart glasses, may directly perform scanning through the smart glasses, what the user sees is directly converted into the 3D printing data, the user does not need to adopt the professional modeling software for designing or adopt the professional 3D scanning equipment for scanning, the acquisition difficulty and cost of the 3D printing data are reduced, and the simplicity for the operation of the user is ensured, thereby reducing a use threshold of the 3D printing for ordinary users and improving the user experience in the smart glasses and 3D printing.

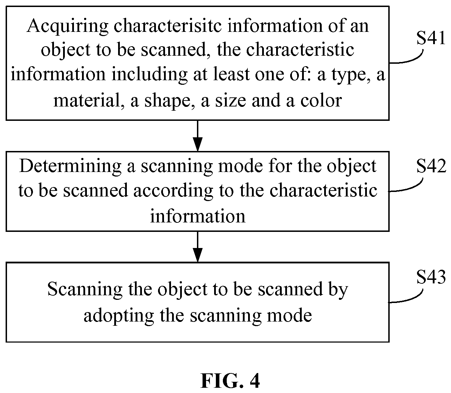

Fig. 4 is a flow chart showing a 3D printing data generation method, according to another exemplary embodiment. As shown in Fig. 4, in another embodiment, the operation that the object to be scanned is scanned to obtain a scanning result includes Steps S41-S43.

In Step S41, characteristic information of the object to be scanned, the characteristic information including at least one of: a type, a material, a shape, a size and a color is acquired.

In Step S42, a scanning mode for the object to be scanned is determined according to the characteristic information.

In Step S43, the object to be scanned is scanned by adopting the scanning mode.

For example, different scanning modes may be set according to the size of the object. For a small-sized object, such as a small sculpture and toy model, scanning may be automatically performed, that is, the user does not need to move for scanning; and for a large-sized object, such as a large-sized sculpture and building, the user may be guided to move around the object to be scanned to comprehensively and accurately acquire 3D printing data of the object to be scanned.

In the embodiment, 3D scanning is performed by adopting the scanning mode corresponding to the characteristic information of the object to be scanned, so that 3D scanning efficiency and accuracy are improved; moreover, the simplicity for the operation of the user is ensured, and the experiences are better.

In another embodiment, the operation that the 3D printing data is sent, according to a selected operation item, to an operating device corresponding to the operation item includes:

when the selected operation item is 3D printing, the 3D printing data is sent to a 3D printer through BlueTooth (BT) or a wireless local area network;
when the selected operation item is data sharing, the 3D printing data is sent to a terminal participating in the data sharing through the BT, the wireless local area network or instant messaging software; and
when the selected operation item is cloud storage, the 3D printing data is uploaded to a cloud server for storage, to enable the 3D printing data to be acquired from the cloud server for offsite printing, downloading or sharing.

Here, the smart glasses and the 3D printer cooperate under a same protocol, such as BT and Wi-Fi, to ensure that the scanning result of the smart glasses may be input into the 3D printer in a specific form for instant 3D printing; the 3D printing data may also be shared to other users; or, when offsite printing is required (that is, the scanned object and an actually printed finished product are not at the same place and even not at the same time), the 3D printing data may be stored in a cloud server, and may be printed off the site as desired or may be shared to the other users for downloading or usage through the cloud server. Therefore, the 3D printing data may be used more conveniently and rapidly, and the user experiences are better.

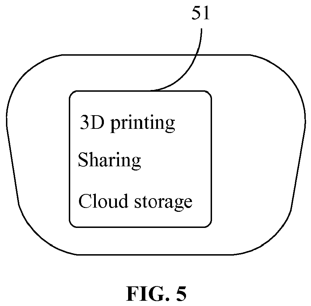

For example, as shown in the figure, after 3D scanning is ended, a dialog box is popped up in a display interface of the smart glasses to query the user about a subsequent operation over the 3D printing data. As shown in Fig. 5, operation items displayed in the dialog box 51 include: 3D printing, sharing, cloud storage, and etc.. The user may select the operation item as desired. If the user selects 3D printing, the smart glasses may be connected to a preset 3D printer or a connectable 3D printer nearby and send the 3D printing data to the 3D printer for 3D printing.

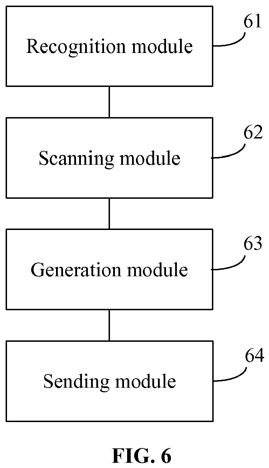

Fig. 6 is a block diagram of a 3D printing data generation device, according to an exemplary embodiment. The device may be implemented into part or all of electronic equipment through software, hardware or a combination of the two. As shown in Fig. 6, the 3D printing data generation device is applied to smart glasses, and includes: a recognition module 61, a scanning module 62, a generation module 63 and a sending module 64.

The recognition module 61 is configured to recognize an object to be scanned.

The scanning module 62 is configured to scan the object to be scanned recognized by the recognition module 61 to obtain a scanning result.

The generation module 63 is configured to generate 3D printing data according to the scanning result of the scanning module 62.

The sending module 64 is configured to send the 3D printing data generated by the generation module 63 to an operating device corresponding to an operation item according to the selected operation item.

In the embodiment, the smart glasses have a 3D scanning function, the object to be scanned is scanned through the smart glasses, the 3D printing data in a format supported by a 3D printer is generated from the scanning result, and the 3D printing data is sent to a specified operating device in a wireless manner, such as the 3D printer, another user terminal or a cloud server. In such a manner, a user does not need to adopt professional modeling software for designing or adopt professional 3D scanning equipment for scanning, an acquisition difficulty and cost of the 3D printing data are reduced, and simplicity for an operation of the user is ensured, thereby reducing a use threshold of the 3D printing for ordinary users and improving user experiences in the smart glasses and 3D printing.

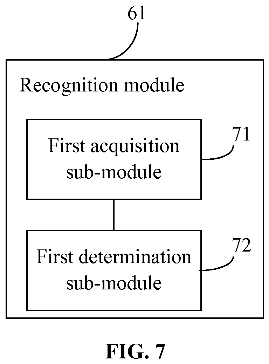

Fig. 7 is a block diagram of a recognition module, according to another exemplary embodiment. As shown in Fig. 7, in another embodiment, the recognition module 61 includes: a first acquisition sub-module 71 and a first determination sub-module 72.

The first acquisition sub-module 71 is configured to acquire an object in a preset display area of the smart glasses.

The first determination sub-module 72 is configured to determine the object, acquired by the first acquisition sub-module 71, in the preset display area as the object to be scanned.

In the embodiment, for avoiding acquisition of wrong 3D data due to scanning of an adjacent object during scanning, the object to be scanned is placed in a specific scanning area for scanning. Therefore, the user needs to place the object to be scanned in the preset display area of the smart glasses when scanning the object to be scanned through the smart glasses.

As shown in Fig. 3, when the user selects 3D scanning, a display window 32 appears in a display area 31 of the smart glasses, and the smart glasses only scans an object in the display window 32. Therefore, the user needs to regulate a position or angle of the smart glasses to make the object 33 to be scanned positioned in the display window 32.

Therefore, the smart glasses may accurately scan the object to be scanned, and may not scan another object not required to be scanned in the user's sight. Therefore, acquisition of wrong 3D scanning data is avoided, and 3D scanning accuracy is improved.

In another embodiment, the scanning module 62 is configured to scan the object to be scanned by adopting at least one of the following sensors on the smart glasses: an infrared sensor, an image sensor or an ultrasonic sensor.

Here, the infrared sensor is a sensor for performing measurement by virtue of the physical property of the infrared ray. The infrared sensor may be used for target detection, object positioning, distance measurement or the like. The image sensor is a photosensitive element, is a device for converting an optical image into an electronic signal, and is widely applied to a digital camera and other electronic optical equipment. An electronic signal corresponding to an optical image of the object to be scanned may be obtained through the image sensor. The ultrasonic sensor is a sensor for converting an ultrasonic signal into a signal of another energy type (usually an electrical signal), and may be used to perform distance measurement on the object to be scanned.

In the embodiment, at least one of an infrared sensor, an image recognition sensor and an ultrasonic ranging sensor is integrated in the smart glasses to endow the smart glasses with a function of scanning a 3D object, namely acquiring data of a shape, structure, color and the like of the object to be scanned. The user, after wearing the smart glasses, may directly perform scanning through the smart glasses, what the user sees is directly converted into the 3D printing data, the user does not need to adopt the professional modeling software for designing or adopt the professional 3D scanning equipment for scanning, the acquisition difficulty and cost of the 3D printing data are reduced, and the simplicity for the operation of the user is ensured, thereby reducing a use threshold of the 3D printing for ordinary users and improving the user experience in the smart glasses and 3D printing.

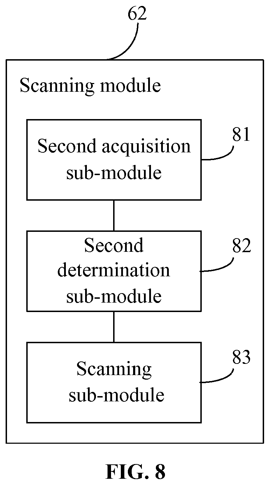

Fig. 8 is a block diagram of a scanning module, according to another exemplary embodiment. As shown in Fig. 8, in the embodiment, the scanning module 62 includes: a second acquisition sub-module 81, a second determination sub-module 82 and a scanning sub-module 83.

The second acquisition sub-module 81 is configured to acquire characteristic information of the object to be scanned recognized by the recognition module 61, the characteristic information including at least one of: a type, a material, a shape, a size and a color.

The second determination sub-module 82 is configured to determine a scanning mode for the object to be scanned according to the characteristic information acquired by the second acquisition sub-module 81.

The scanning sub-module 83 is configured to scan the object to be scanned by adopting the scanning mode determined by the second determination sub-module 82.

For example, different scanning modes may be set according to the size of the object. For a small-sized object, such as a small sculpture and toy model, scanning may be automatically performed, that is, the user does not need to move for scanning; and for a large-sized object, such as a large-sized sculpture and building, the user may be guided to move around the object to be scanned to comprehensively and accurately acquire 3D printing data of the object to be scanned.

In the embodiment, 3D scanning is performed by adopting the scanning mode corresponding to the characteristic information of the object to be scanned, so that 3D scanning efficiency and accuracy are improved; moreover, the simplicity for the operation of the user is ensured, and the experiences are better.

In another embodiment, the sending module 64 is configured to, when the selected operation item is 3D printing, send the 3D printing data to a 3D printer through BT or a wireless local area network; when the selected operation item is data sharing, send the 3D printing data to a terminal participating in the data sharing through BT, the wireless local area network or instant messaging software; and when the selected operation item is cloud storage, upload the 3D printing data to a cloud server for storage, to enable the 3D printing data to be acquired from the cloud server for offsite printing, downloading or sharing.

Here, the smart glasses and the 3D printer cooperate under the same protocol, such as BT and Wi-Fi, to ensure that the scanning result of the smart glasses may be input into the 3D printer in a specific form for instant 3D printing; the 3D printing data may also be shared to another user; or, when offsite printing is required (that is, the scanned object and an actually printed finished product are not at the same place and even not at the same time), the 3D printing data may be stored in a cloud server, and may be printed off the site as desired, or may be shared to the other user for downloading or usage through the cloud server. Therefore, the 3D printing data may be used more conveniently and rapidly, and the user experiences are better.

For example, as shown in the figure, after 3D scanning is ended, a dialog box is popped up in a display interface of the smart glasses to query the user about a subsequent operation over the 3D printing data. As shown in Fig. 5, operation items displayed in the dialog box 51 include: 3D printing, sharing, cloud storage, and etc.. The user may select the operation item as desired. If the user selects 3D printing, the smart glasses may be connected to a preset 3D printer or a connectable 3D printer nearby and send the 3D printing data to the 3D printer for 3D printing.

An embodiment of the present invention further provides a 3D printing data generation device, which is applied to smart glasses and includes:
a processor; and
a memory configured to store instructions executable by the processor,
wherein the processor is configured to:
recognize an object to be scanned;
scan the object to be scanned to obtain a scanning result;
generate 3D printing data according to the scanning result; and
send, according to a selected operation item, the 3D printing data to an operating device corresponding to the operation item.

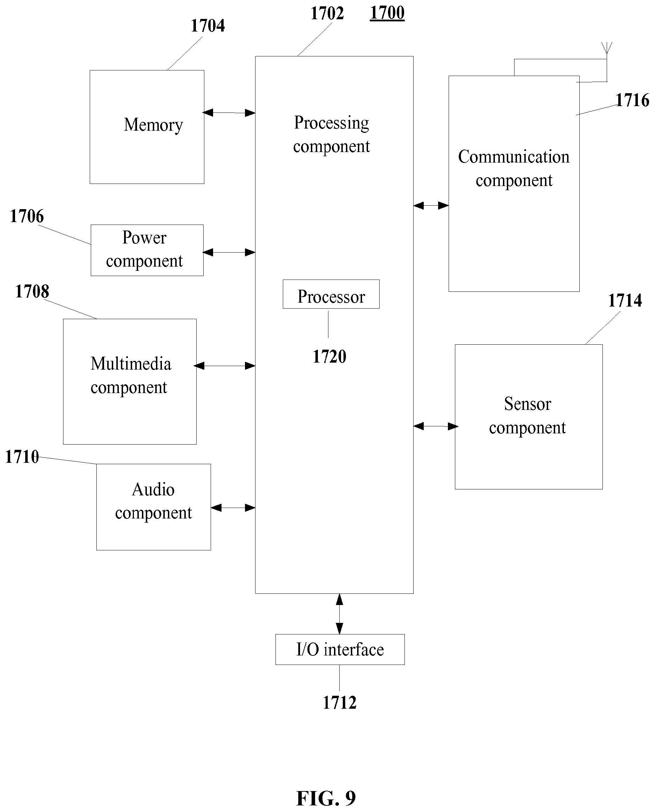

Fig. 9 is a block diagram of a 3D printing data generation device, according to an exemplary embodiment. The device 1700 is applied to smart glasses.

The device 1700 may include one or more of the following components: a processing component 1702, a memory 1704, a power component 1706, a multimedia component 1708, an audio component 1710, an Input/Output (I/O) interface 1712, a sensor component 1714, and a communication component 1716.

The processing component 1702 typically controls overall operations of the device 1700, such as the operations associated with display, telephone calls, data communications, camera operations, and recording operations. The processing component 1702 may include one or more processors 1720 to execute instructions to perform all or part of the steps in the abovementioned method. Moreover, the processing component 1702 may include one or more modules which facilitate interaction between the processing component 1702 and the other components. For instance, the processing component 1702 may include a multimedia module to facilitate interaction between the multimedia component 1708 and the processing component 1702.

The memory 1704 is configured to store various types of data to support the operation of the device 1700. Examples of such data include instructions for any application programs or methods operated on the device 1700, contact data, phonebook data, messages, pictures, video, etc. The memory 1704 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1706 provides power for various components of the device 1700. The power component 1706 may include a power management system, one or more power supplies, and other components associated with the generation, management and distribution of power for the device 1700.

The multimedia component 1708 includes a screen providing an output interface between the device 1700 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also detect a duration and pressure associated with the touch or swipe action. In some embodiments, the multimedia component 1708 includes a front camera and/or a rear camera. The front camera and/or the rear camera may receive external multimedia data when the device 1700 is in an operation mode, such as a photographing mode or a video mode. Each of the front camera and the rear camera may be a fixed optical lens system or have focusing and optical zooming capabilities.

The audio component 1710 is configured to output and/or input an audio signal. For example, the audio component 1710 includes a Microphone (MIC), and the MIC is configured to receive an external audio signal when the device 1700 is in the operation mode, such as a call mode, a recording mode and a voice recognition mode. The received audio signal may be further stored in the memory 1704 or sent through the communication component 1716. In some embodiments, the audio component 1710 further includes a speaker configured to output the audio signal.

The I/O interface 1712 provides an interface between the processing component 1702 and a peripheral interface module, and the peripheral interface module may be a keyboard, a click wheel, a button and the like. The button may include, but not limited to: a home button, a volume button, a starting button and a locking button.

The sensor component 1714 includes one or more sensors configured to provide status assessment in various aspects for the device 1700. For instance, the sensor component 1714 may detect an on/off status of the device 1700 and relative positioning of components, such as a display and small keyboard of the device 1700, and the sensor component 1714 may further detect a change in a position of the device 1700 or a component of the device 1700, presence or absence of contact between the user and the device 1700, orientation or acceleration/deceleration of the device 1700 and a change in temperature of the device 1700. The sensor component 1714 may include a proximity sensor configured to detect presence of an object nearby without any physical contact. The sensor component 1714 may also include a light sensor, such as a Complementary Metal Oxide Semiconductor (CMOS) or Charge Coupled Device (CCD) image sensor, configured for use in an imaging application. In some embodiments, the sensor component 1714 may also include an acceleration sensor, a gyroscope sensor, a magnetic sensor, a pressure sensor or a temperature sensor.

The communication component 1716 is configured to facilitate wired or wireless communication between the device 1700 and another device. The device 1700 may access a communication-standard-based wireless network, such as a Wi-Fi network, a 2nd-Generation (2G) or 3rd-Generation (3G) network or a combination thereof. In an exemplary embodiment, the communication component 1716 receives a broadcast signal or broadcast associated information from an external broadcast management system through a broadcast channel. In an exemplary embodiment, the communication component 1716 further includes a Near Field Communciation (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BT technology and another technology.

In an exemplary embodiment, the device 1700 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 1704 including an instruction, and the instruction may be executed by the processor 1720 of the device 1700 to implement the abovementioned method. For example, the non-transitory computer-readable storage medium may be a ROM, a Compact Disc Read-Only Memory (CD-ROM), a magnetic tape, a floppy disc, optical data storage equipment and the like.

According to a non-transitory computer-readable storage medium, instructions in the storage medium are executed by the processor of the device 1700 to enable the device 1700 to execute the abovementioned 3D printing data generation method, the method including:
recognizing an object to be scanned;
scanning the object to be scanned to obtain a scanning result;
generating 3D printing data according to the scanning result; and
sending, according to a selected operation item, the 3D printing data to an operating device corresponding to the operation item.

In another embodiment, the recognizing the object to be scanned includes:
acquiring an object in a preset display area of the smart glasses; and
determining the object in the preset display area as the object to be scanned.

In another embodiment, the scanning the object to be scanned to obtain the scanning result includes:
scanning the object to be scanned by adopting at least one of an infrared sensor, an image sensor or an ultrasonic sensor in the smart glasses.

In another embodiment, the scanning the object to be scanned to obtain a scanning result includes:
acquiring characteristic information of the object to be scanned, the characteristic information including at least one of: a type, a material, a shape, a size and a color;
determining a scanning mode for the object to be scanned according to the characteristic information; and
scanning the object to be scanned by adopting the scanning mode.

In another embodiment, the sending, according to a selected operation item, the 3D printing data to the operating device corresponding to the operation item includes:
when the selected operation item is 3D printing, sending the 3D printing data to a 3D printer through BT or a wireless local area network;
when the selected operation item is data sharing, sending the 3D printing data to a terminal participating in the data sharing through the BT, the wireless local area network or instant messaging software; and
when the selected operation item is cloud storage, uploading the 3D printing data to a cloud server for storage to enable the 3D printing data to be acquired from the cloud server for offsite printing, downloading or sharing.

Other embodiments of the present invention will be apparent to those skilled in the art from consideration of the specification and practice of the present invention. This application is intended to cover any variations, uses, or adaptations of the embodiments of the present invention following the general principles thereof and including such departures from the embodiments of the present invention as come within known or customary practice in the art. It is intended that the specification and examples be considered as exemplary only, with a true scope of the present invention being indicated by the following claims.

It will be appreciated that the present invention is not limited to the exact construction that has been described above and illustrated in the accompanying drawings, and that various modifications and changes may be made without departing from the scope thereof. It is intended that the scope of the present invention only be limited by the appended claims.

### INDUSTRIAL APPLICABILITY

The technical solution provided by the embodiments of the present invention may achieve the following beneficial effects.

In the embodiments, the smart glasses have a 3D scanning function, the object to be scanned is scanned through the smart glasses, the 3D printing data in a format supported by the 3D printer is generated from the scanning result, and the 3D printing data is sent to a specified operating device, such as the 3D printer, another user terminal or the cloud server, in a wireless manner. In such a manner, a user does not need to adopt professional modeling software for designing or adopt professional 3D scanning equipment for scanning, an acquisition difficulty and cost of the 3D printing data are reduced, and simplicity for an operation of the user is ensured, thereby reducing a use threshold of 3D printing for ordinary users and improving user experiences in the smart glasses and 3D printing.

In another embodiment, for avoiding acquisition of wrong 3D data due to scanning of an adjacent object during scanning, the object to be scanned is placed in a specific scanning area for scanning. Therefore, the user needs to place the object is placed to be scanned in the preset display area of the smart glasses when scanning the object to be scanned through the smart glasses.

In another embodiment, at least of an infrared sensor, an image recognition sensor and an ultrasonic ranging sensor is integrated in the smart glasses to endow the smart glasses with a function of scanning a 3D object, namely acquiring data of a shape, structure, color and the like of the object to be scanned. The user, after wearing the smart glasses, may directly perform scanning through the smart glasses, what the user sees is directly converted into the 3D printing data, the user does not need to adopt the professional modeling software for designing or adopt the professional 3D scanning equipment for scanning, the acquisition difficulty and cost of the 3D printing data are reduced, and the simplicity for the operation of the user is ensured, thereby reducing a use threshold of the 3D printing for ordinary users and improving the user experiences in the smart glasses and 3D printing.

In another embodiment, 3D scanning is performed by adopting the scanning mode corresponding to the characteristic information of the object to be scanned, so that 3D scanning efficiency and accuracy are improved; moreover, the simplicity for the operation of the user is ensured, and the experiences are better.

In another embodiment, the smart glasses and the 3D printer cooperate under a same protocol, such as BT and Wireless Fidelity (Wi-Fi), to ensure that the scanning result of the smart glasses may be input into the 3D printer in a specific form for instant 3D printing; the 3D printing data may also be shared to other users; or, when offsite printing is required (that is, the scanned object and an actually printed finished product are not at the same place and even not at the same time), the 3D printing data may be stored in a cloud server, and may be printed off the site as desired or may be shared to other users for downloading or usage through the cloud server. Therefore, the 3D printing data may be used more conveniently and rapidly, and the user experiences are better.

## Claims

1. A Three-Dimensional, 3D, printing data generation method, **characterized in that**, the method is performed by smart glasses, and the method comprises:
acquiring (S21) an object in a preset display area of a display area of the smart glasses;
determining (S22) the object in the preset display area as the object to be scanned;
scanning the object to be scanned by adopting at least one of sensors in the smart glasses so that the smart glasses have a 3D scanning function;
acquiring (S41) characteristic information of the object to be scanned, wherein the characteristic information comprises a size;
determining (S42) a scanning mode for the object to be scanned according to the size of the object to be scanned, wherein for a small-sized object, scanning is automatically performed, and for a large-sized object, a user is guided to move around the object to be scanned to comprehensively and accurately acquire 3D printing data of the object to be scanned, wherein a small-sized object is an object with a size small enough such that the user does not need to move for scanning, wherein a large-sized object is an object not small enough such that the user does not need to move for scanning;
scanning (S43) the object to be scanned by adopting the scanning mode;
obtaining a scanning result;
generating (S13) 3D printing data according to the scanning result; and
sending (S14), according to a selected operation item, the 3D printing data to an operating device corresponding to the operation item.

2. The method of claim 1, wherein the at least one of sensors in the smart glasses comprises:
an infrared sensor, an image sensor and an ultrasonic sensor.

3. The method of any one of the preceding claims, wherein the sending, according to a selected operation item, the 3D printing data to the operating device corresponding to the operation item comprises:
when the selected operation item is 3D printing, sending the 3D printing data to a 3D printer through BlueTooth, BT, or a wireless local area network;
when the selected operation item is data sharing, sending the 3D printing data to a terminal participating in the data sharing through the BT, the wireless local area network or instant messaging software; and
when the selected operation item is cloud storage, uploading the 3D printing data to a cloud server for storage, to enable the 3D printing data to be acquired from the cloud server for offsite printing, downloading or sharing.

4. Smart glasses comprising a three-dimensional, 3D, printing data generation device, **characterized in that**, the device is located in the smart glasses and comprises:
a recognition module (61), configured to recognize an object to be scanned;
wherein the recognition module comprises: a first acquisition sub-module (71) and a first determination sub-module (72),
wherein the first acquisition sub-module (71) is configured to acquire an object in a preset display area of a display area of the smart glasses;
wherein the first determination sub-module (72) is configured to determine the object, acquired by the first acquisition sub-module (71), in the preset display area as the object to be scanned;
a scanning module (62), configured to scan the object to be scanned recognized by the recognition module (61) by adopting at least one of sensors in the smart glasses to obtain a scanning result so that the smart glasses have a 3D scanning function;
wherein the scanning module (62) comprises: a second acquisition sub-module (81), a second determination sub-module (82) and a scanning sub-module (83),
wherein the second acquisition sub-module (81) is configured to acquire characteristic information of the object to be scanned recognized by the recognition module (61), wherein the characteristic information comprises a size;
wherein the second determination sub-module (82) is configured to determine a scanning mode for the object to be scanned according to the size of the object to be scanned (81), wherein for a small-sized object, the scanning mode is configured to automatically perform scanning, and for a large-sized object, the scanning mode is configured to guide a user is to move around the object to be scanned to comprehensively and accurately acquire 3D printing data of the object to be scanned, wherein a small-sized object is an object with a size small enough such that the user does not need to move for scanning, wherein a large-sized object is an object not small enough such that the user does not need to move for scanning;
wherein the scanning sub-module (83) is configured to scan the object to be scanned by adopting the scanning mode (62) determined by the second determination sub-module (82)
a generation module (63), configured to generate 3D printing data according to the scanning result of the scanning module (62); and
a sending module (64), configured to send, according to a selected operation item, the 3D printing data generated by the generation module (63) to an operating device corresponding to the operation item.

5. The device of claim 4, wherein the at least one of sensors in the smart glasses comprises: an infrared sensor, an image sensor and an ultrasonic sensor.

6. The device of claims 4 or 5, wherein the characteristic information comprising at least one of: a type, a material, a shape and a color.

7. The device of any one of claims 4 to 6, wherein the sending module (64) is configured to:
when the selected operation item is 3D printing, send the 3D printing data to a 3D printer through BlueTooth, BT, or a wireless local area network;
when the selected operation item is data sharing, send the 3D printing data to a terminal participating in the data sharing through the BT, the wireless local area network or instant messaging software; and
when the selected operation item is cloud storage, upload the 3D printing data to a cloud server for storage to enable the 3D printing data to be acquired from the cloud server for offsite printing, downloading or sharing.

8. System comprising a three-dimensional, 3D, printing data generation device, and smart glasses, **characterized in that**, the device is located in the smart glasses and comprises:
a communication component (1716);
a sensor component (1714);
a processor (1720); and
a memory (1704) configured to store instructions executable by the processor (1720),
wherein the processor (1720) is configured to:
acquire an object in a preset display area of a display area of the smart glasses;
determine the object in the preset display area as the object to be scanned;
scan the object to be scanned by adopting at least one of sensors in the smart glasses so that the smart glasses have a 3D scanning function;
acquire characteristic information of the object to be scanned, wherein the characteristic information comprises a size;
determine a scanning mode for the object to be scanned according to the size of the object to be scanned, wherein for a small-sized object, scanning is automatically performed, and for a large-sized object, a user is guided to move around the object to be scanned to comprehensively and accurately acquire 3D printing data of the object to be scanned, wherein a small-sized object is an object with a size small enough such that the user does not need to move for scanning, wherein a large-sized object is an object not small enough such that the user does not need to move for scanning;
control the sensor component (1714) to scan the object to be scanned by adopting the scanning mode;
obtain a scanning result;
generate 3D printing data according to the scanning result; and
control the communication component (1716) to send, according to a selected operation item, the 3D printing data to an operating device corresponding to the operation item.

9. The system of claim 8, wherein the at least one of sensors in the smart glasses comprises:
an infrared sensor, an image sensor and an ultrasonic sensor.

10. The system of claim 8 or 9, wherein the processor is further configured to control the communication component (1716) to:
when the selected operation item is 3D printing, send the 3D printing data to a 3D printer through BlueTooth, BT, or a wireless local area network;
when the selected operation item is data sharing, send the 3D printing data to a terminal participating in the data sharing through the BT, the wireless local area network or instant messaging software; and
when the selected operation item is cloud storage, upload the 3D printing data to a cloud server for storage, to enable the 3D printing data to be acquired from the cloud server for offsite printing, downloading or sharing.

11. A computer program including instructions for executing the steps of a communication method according to any one of claims 1 to 3 when said program is executed by a computer located in smart glasses.

## Patentansprüche

1. Verfahren zur Erzeugung von dreidimensionalen, 3D-Druckdaten, **dadurch gekennzeichnet, dass** das Verfahren mit bzw. von einer intelligenten Brille durchgeführt wird und das Verfahren umfasst:
Erfassen (S21) eines Objekts in einem voreingestellten Anzeigebereich eines Anzeigebereichs derintelligenten Brille;
Bestimmung (S22) des Objekts im voreingestellten Anzeigebereich als das zu scannende Objekt;
Abtasten des zu scannenden Objekts durch Anwendung von mindestens einem der Sensoren in der intelligenten Brille, so dass die intelligente Brille eine 3D-Scanfunktion hat;
Erfassen (S41) von charakteristischen Informationen des zu scannenden Objekts, wobei die charakteristischen Informationen eine Größe umfassen;
Bestimmen (S42) eines Abtastmodus für das zu scannende Objekt entsprechend der Größe des zu scannenden Objekts, wobei für ein kleines Objekt die Abtastung automatisch durchgeführt wird und für ein großes Objekt ein Benutzer dazu angeleitet wird, sich um das zu scannende Objekt herum zu bewegen, um 3D-Druckdaten des zu scannenden Objekts umfassend und genau zu erfassen, wobei ein kleines Objekt ein Objekt mit einer Größe ist, die klein genug ist, so dass der Benutzer sich zum Scannen nicht bewegen muss, wobei ein großes Objekt ein Objekt ist, das nicht klein genug ist, so dass der Benutzer sich zum Scannen nicht bewegen muss;
Scannen (S43) des zu scannenden Objekts, indem der Scanmodus gewählt wird;
um ein Scan-Ergebnis zu erhalten;
Erzeugen (S13) von 3D-Druckdaten entsprechend dem Abtastergebnis; und
Senden (S14), gemäß einem ausgewählten Betriebselement, der 3D-Druckdaten an ein Betrieb, das dem Betriebselement entsprichtBetriebselement.

2. Verfahren nach Anspruch 1, wobei der mindestens eine der Sensoren in der intelligenten Brille umfasst:
einen Infrarotsensor, einen Bildsensor und einen Ultraschallsensor.

3. Verfahren nach einem der vorangehenden Ansprüche, wobei das Senden der 3D-Druckdaten an das dem Vorgang entsprechende Betriebsgerät gemäß einem ausgewählten Vorgangspunkt umfasst:
wenn der ausgewählte Vorgang 3D-Druck ist, Senden der 3D-Druckdaten an einen 3D-Drucker über BlueTooth, BT oder ein drahtloses lokales Netzwerk;
wenn das ausgewählte Betriebselement die gemeinsame Nutzung von Daten ist, Senden der 3D-Druckdaten an ein Endgerät, das an der gemeinsamen Nutzung von Daten über das BT, das drahtlose lokale Netzwerk oder die Instant-Messaging-Software teilnimmt; und
wenn das ausgewählte Betriebselement Cloud-Speicherung ist, Hochladen der 3D-Druckdaten auf einen Cloud-Server zur Speicherung, damit die 3D-Druckdaten vom Cloud-Server zum externen Drucken, Herunterladen oder Teilen abgerufen werden können.

4. Intelligente Brille mit einer Vorrichtung zur Erzeugung dreidimensionaler Druckdaten, **dadurch gekennzeichnet, dass** sich die Vorrichtung in der intelligenten Brille befindet und umfasst:
ein Erkennungsmodul (61), das so konfiguriert ist, dass es ein zu scannendes Objekt erkennt;
wobei das Erkennungsmodul umfasst: ein erstes Erfassungsuntermodul (71) und ein erstes Bestimmungsuntermodul (72),
wobei das erste Erfassungsuntermodul (71) so konfiguriert ist, dass es ein Objekt in einem voreingestellten Anzeigebereich eines Anzeigebereichs der intelligenten Brille erfasst;
wobei das erste Bestimmungsuntermodul (72) so konfiguriert ist, dass es das von dem ersten Erfassungsuntermodul (71) erfasste Objekt in dem voreingestellten Anzeigebereich als das zu scannende Objekt bestimmt;
ein Abtastmodul (62), das so konfiguriert ist, dass es das vom Erkennungsmodul (61) erkannte abzutastende Objekt abtastet, indem es mindestens einen der Sensoren in der intelligenten Brille übernimmt, um ein Abtastergebnis zu erhalten, so dass die intelligente Brille eine 3D-Abtastfunktion hat;
wobei das Abtastmodul (62) umfasst: ein zweites Erfassungsuntermodul (81), ein zweites Bestimmungsuntermodul (82) und ein Abtastuntermodul (83),
wobei das zweite Erfassungsuntermodul (81) konfiguriert ist, um charakteristische Informationen des zu scannenden Objekts zu erfassen, das von dem Erkennungsmodul (61) erkannt wird, wobei die charakteristischen Informationen eine Größe umfassen;
wobei das zweite Bestimmungsuntermodul (82) so konfiguriert ist, dass es einen Abtastmodus für das abzutastende Objekt entsprechend der Größe des abzutastenden Objekts (81) bestimmt, wobei für ein kleines Objekt der Abtastmodus so konfiguriert ist, dass er das Abtasten automatisch durchführt, und für ein großes Objekt der Scanmodus so konfiguriert ist, dass er einen Benutzer dazu anleitet, sich um das zu scannende Objekt herum zu bewegen, um 3D-Druckdaten des zu scannenden Objekts umfassend und genau zu erfassen, wobei ein kleines Objekt ein Objekt mit einer Größe ist, die klein genug ist, dass der Benutzer sich zum Scannen nicht bewegen muss, wobei ein großes Objekt ein Objekt ist, das nicht klein genug ist, dass der Benutzer sich zum Scannen nicht bewegen muss;
wobei das Abtastuntermodul (83) so konfiguriert ist, dass es das abzutastende Objekt abtastet, indem es den von dem zweiten Bestimmungsuntermodul (82) bestimmten Abtastmodus (62) annimmt
ein Erzeugungsmodul (63), das so konfiguriert ist, dass es 3D-Druckdaten in Übereinstimmung mit dem Abtastergebnis des Abtastmoduls (62) erzeugt; und
ein Sendemodul (64), das so konfiguriert ist, dass es die von dem Erzeugungsmodul (63) erzeugten 3D-Druckdaten entsprechend einem ausgewählten Vorgang an ein dem Vorgang entsprechendes Betriebsgerät sendet.

5. Die Vorrichtung nach Anspruch 4, wobei der mindestens eine der Sensoren in der intelligenten Brille Folgendes umfasst: einen Infrarotsensor, einen Bildsensor und einen Ultraschallsensor.

6. Vorrichtung nach Anspruch 4 oder 5, wobei die charakteristischen Informationen mindestens eines der folgenden Merkmale umfassen: einen Typ, ein Material, eine Form und eine Farbe.

7. Die Vorrichtung nach einem der Ansprüche 4 bis 6, wobei das Sendemodul (64) so konfiguriert ist, dass es:
wenn das ausgewählte Element 3D-Druck ist, die 3D-Druckdaten über BlueTooth, BT oder ein drahtloses lokales Netzwerk an einen 3D-Drucker sendet;
wenn das ausgewählte Betriebselement die gemeinsame Nutzung von Daten ist, die 3D-Druckdaten an ein Endgerät sendet, das an der gemeinsamen Nutzung von Daten über das BT, das drahtlose lokale Netzwerk oder die Instant-Messaging-Software teilnimmt; und
wenn der ausgewählte Vorgang Cloud-Speicherung ist, die 3D-Druckdaten zur Speicherung auf einen Cloud-Server hochlädt, damit die 3D-Druckdaten vom Cloud-Server zum externen Drucken, Herunterladen oder Teilen abgerufen werden können.

8. System, das eine Vorrichtung zur Erzeugung dreidimensionaler 3D-Druckdaten und eine intelligente Brille umfasst, **dadurch gekennzeichnet, dass** sich die Vorrichtung in der intelligenten Brille befindet und Folgendes umfasst:
eine Kommunikationskomponente (1716);
ein Sensorteil (1714);
einen Prozessor (1720); und
einen Speicher (1704), der so konfiguriert ist, dass er vom Prozessor (1720) ausführbare Befehle speichert,
wobei der Prozessor (1720) konfiguriert ist, um:
ein Objekt in einem voreingestellten Anzeigebereich eines Anzeigebereichs der intelligenten Brille zu erfassen;
das Objekt im voreingestellten Anzeigebereich als das zu scannende Objekt bestimmen;
das zu scannende Objekt zu scannen, indem mindestens einer der Sensoren in der intelligenten Brille verwendet wird, so dass die intelligente Brille eine 3D-Scanfunktion hat;
Erfassung charakteristischer Informationen des zu scannenden Objekts, wobei die charakteristischen Informationen eine Größe umfassen;
Bestimmen eines Abtastmodus für das zu scannende Objekt entsprechend der Größe des zu scannenden Objekts, wobei für ein kleines Objekt das Scannen automatisch durchgeführt wird und für ein großes Objekt ein Benutzer angeleitet wird, sich um das zu scannende Objekt herum zu bewegen, um umfassende und genaue 3D-Druckdaten des zu scannenden Objekts zu erfassen, wobei ein kleines Objekt ein Objekt ist, das klein genug ist, so dass der Benutzer sich zum Scannen nicht bewegen muss, wobei ein großes Objekt ein Objekt ist, das nicht klein genug ist, so dass der Benutzer sich zum Scannen nicht bewegen muss;
die Sensorkomponente (1714) so zu steuern, dass sie das zu scannende Objekt abtastet, indem sie den Abtastmodus annimmt;
ein Scan-Ergebnis zu erhalten;
Erzeugen von 3D-Druckdaten entsprechend dem Scanergebnis; und
die Kommunikationskomponente (1716) so zu steuern, dass sie die 3D-Druckdaten entsprechend einem ausgewählten Vorgang an ein Betriebsgerät sendet, das dem Vorgang entspricht.

9. Das System nach Anspruch 8, wobei der mindestens eine der Sensoren in der intelligenten Brille umfasst:
einen Infrarotsensor, einen Bildsensor und einen Ultraschallsensor.

10. Das System nach Anspruch 8 oder 9, wobei der Prozessor ferner so konfiguriert ist, dass er die Kommunikationskomponente (1716) steuert, um:
wenn das ausgewählte Element 3D-Druck ist, die 3D-Druckdaten über BlueTooth, BT oder ein drahtloses lokales Netzwerk an einen 3D-Drucker zu senden;
wenn das ausgewählte Betriebselement die gemeinsame Nutzung von Daten ist, die 3D-Druckdaten über das BT, das drahtlose lokale Netzwerk oder die Instant-Messaging-Software an ein Endgerät zu senden, das an der gemeinsamen Nutzung von Daten teilnimmt; und
wenn der ausgewählte Vorgang Cloud-Speicherung ist, die 3D-Druckdaten zur Speicherung auf einen Cloud-Server hochzuladen, damit die 3D-Druckdaten vom Cloud-Server zum externen Drucken, Herunterladen oder Teilen abgerufen werden können.

11. Computerprogramm mit Anweisungen zum Ausführen der Schritte eines Kommunikationsverfahrens nach einem der Ansprüche 1 bis 3, wenn das Programm von einem in einer intelligenten Brille befindlichen Computer ausgeführt wird.

## Revendications

1. Procédé de génération de données d'impression tridimensionnelle, 3D, **caractérisé en ce que**, le procédé est exécuté par des lunettes intelligentes, et le procédé comprend :
l'acquisition (S21) d'un objet dans une zone d'affichage prédéfinie d'une zone d'affichage des lunettes intelligentes ;
déterminer (S22) l'objet dans la zone d'affichage prédéfinie comme étant l'objet à balayer ;
balayer l'objet à balayer en adoptant au moins un des capteurs dans les lunettes intelligentes de sorte que les lunettes intelligentes ont une fonction de balayage 3D ;
l'acquisition (S41) d'informations caractéristiques de l'objet à numériser, les informations caractéristiques comprenant une taille ;
déterminer (S42) un mode de balayage pour l'objet à balayer en fonction de la taille de l'objet à balayer, dans lequel pour un objet de petite taille, le balayage est automatiquement effectué, et pour un objet de grande taille, un utilisateur est guidé pour se déplacer autour de l'objet à balayer afin d'acquérir de manière complète et précise des données d'impression 3D de l'objet à balayer, dans lequel un objet de petite taille est un objet avec une taille suffisamment petite pour que l'utilisateur n'ait pas besoin de se déplacer pour le balayage, dans lequel un objet de grande taille est un objet pas assez petit pour que l'utilisateur n'ait pas besoin de se déplacer pour le balayage ;
numérisation (S43) de l'objet à numériser en adoptant le mode de numérisation ;
l'obtention d'un résultat de balayage ;
générer (S13) des données d'impression 3D en fonction du résultat du balayage ; et
envoyer (S14), selon un élément d'opération sélectionné, les données d'impression 3D à un dispositif d'exploitation correspondant à l'élément d'opération.

2. Procédé de la revendication 1, dans lequel le au moins un des capteurs dans les lunettes intelligentes comprend :
un capteur infrarouge, un capteur d'image et un capteur à ultrasons.

3. Le procédé de l'une quelconque des revendications précédentes, dans lequel l'envoi, selon un élément d'opération sélectionné, des données d'impression 3D au dispositif d'exploitation correspondant à l'élément d'opération comprend :
lorsque l'élément d'opération sélectionné est l'impression 3D, envoyer les données d'impression 3D à une imprimante 3D via BlueTooth, BT ou un réseau local sans fil ;
lorsque l'élément d'opération sélectionné est le partage de données, envoyer les données d'impression 3D à un terminal participant au partage de données par le biais du BT, du réseau local sans fil ou du logiciel de messagerie instantanée ; et
lorsque l'élément d'opération sélectionné est le stockage en nuage, télécharger les données d'impression 3D vers un serveur en nuage pour le stockage, afin de permettre l'acquisition des données d'impression 3D à partir du serveur en nuage pour une impression, un téléchargement ou un partage hors site.

4. Lunettes intelligentes comprenant un dispositif de génération de données d'impression tridimensionnelle, 3D, **caractérisées en ce que**, le dispositif est situé dans les lunettes intelligentes et comprend :
un module de reconnaissance (61), configuré pour reconnaître un objet à numériser ;
dans lequel le module de reconnaissance comprend : un premier sous-module d'acquisition (71) et un premier sous-module de détermination (72),
dans lequel le premier sous-module d'acquisition (71) est configuré pour acquérir un objet dans une zone d'affichage prédéfinie d'une zone d'affichage des lunettes intelligentes ;
dans lequel le premier sous-module de détermination (72) est configuré pour déterminer l'objet, acquis par le premier sous-module d'acquisition (71), dans la zone d'affichage prédéfinie comme l'objet à balayer ;
un module de balayage (62), configuré pour balayer l'objet à balayer reconnu par le module de reconnaissance (61) en adoptant au moins un des capteurs dans les lunettes intelligentes pour obtenir un résultat de balayage de sorte que les lunettes intelligentes ont une fonction de balayage 3D ;
dans lequel le module de balayage (62) comprend : un second sous-module d'acquisition (81), un second sous-module de détermination (82) et un sous-module de balayage (83),
dans lequel le second sous-module d'acquisition (81) est configuré pour acquérir des informations caractéristiques de l'objet à scanner reconnu par le module de reconnaissance (61), dans lequel les informations caractéristiques comprennent une taille ;
dans lequel le second sous-module de détermination (82) est configuré pour déterminer un mode de balayage pour l'objet à balayer selon la taille de l'objet à balayer (81), dans lequel pour un objet de petite taille, le mode de balayage est configuré pour effectuer automatiquement le balayage, et pour un objet de grande taille, le mode de balayage est configuré pour guider un utilisateur qui doit se déplacer autour de l'objet à balayer pour acquérir de manière complète et précise des données d'impression 3D de l'objet à balayer, dans lequel un objet de petite taille est un objet avec une taille suffisamment petite pour que l'utilisateur n'ait pas besoin de se déplacer pour le balayage, dans lequel un objet de grande taille est un objet qui n'est pas suffisamment petit pour que l'utilisateur n'ait pas besoin de se déplacer pour le balayage ;
dans lequel le sous-module de balayage (83) est configuré pour balayer l'objet à balayer en adoptant le mode de balayage (62) déterminé par le second sous-module de détermination (82).
un module de génération (63), configuré pour générer des données d'impression 3D selon le résultat de balayage du module de balayage (62) ; et
un module d'envoi (64), configuré pour envoyer, selon un élément d'opération sélectionné, les données d'impression 3D générées par le module de génération (63) à un dispositif d'exploitation correspondant à l'élément d'opération.

5. Dispositif de la revendication 4, dans lequel le au moins un des capteurs dans les lunettes intelligentes comprend : un capteur infrarouge, un capteur d'image et un capteur à ultrasons.

6. Dispositif des revendications 4 ou 5, dans lequel les informations caractéristiques comprennent au moins l'un des éléments suivants : un type, un matériau, une forme et une couleur.

7. Dispositif de l'une quelconque des revendications 4 à 6, dans lequel le module d'envoi (64) est configuré pour :
lorsque l'élément d'opération sélectionné est l'impression 3D, envoyer les données d'impression 3D à une imprimante 3D via BlueTooth, BT ou un réseau local sans fil ;
lorsque l'élément d'opération sélectionné est le partage de données, envoyer les données d'impression 3D à un terminal participant au partage de données par le biais du BT, du réseau local sans fil ou du logiciel de messagerie instantanée ; et
lorsque l'élément d'opération sélectionné est le stockage en nuage, télécharger les données d'impression 3D vers un serveur en nuage pour le stockage afin de permettre l'acquisition des données d'impression 3D à partir du serveur en nuage pour une impression, un téléchargement ou un partage hors site.

8. Système comprenant un dispositif de génération de données d'impression tridimensionnelle, 3D, et des lunettes intelligentes, **caractérisé en ce que**, le dispositif est situé dans les lunettes intelligentes et comprend :
un composant de communication (1716) ;
un composant de capteur (1714) ;
un processeur (1720) ; et
une mémoire (1704) configurée pour stocker des instructions exécutables par le processeur (1720),
dans lequel le processeur (1720) est configuré pour :
acquérir un objet dans une zone d'affichage prédéfinie d'une zone d'affichage des lunettes intelligentes ;
déterminer l'objet dans la zone d'affichage prédéfinie comme étant l'objet à numériser ;
numériser l'objet à numériser en adoptant au moins un des capteurs dans les lunettes intelligentes de sorte que les lunettes intelligentes ont une fonction de numérisation 3D ;
acquérir des informations caractéristiques de l'objet à numériser, les informations caractéristiques comprenant une taille ;
déterminer un mode de balayage pour l'objet à balayer en fonction de la taille de l'objet à balayer, dans lequel pour un objet de petite taille, le balayage est automatiquement effectué, et pour un objet de grande taille, un utilisateur est guidé pour se déplacer autour de l'objet à balayer afin d'acquérir de manière complète et précise des données d'impression 3D de l'objet à balayer, dans lequel un objet de petite taille est un objet avec une taille suffisamment petite pour que l'utilisateur n'ait pas besoin de se déplacer pour le balayage, dans lequel un objet de grande taille est un objet pas assez petit pour que l'utilisateur n'ait pas besoin de se déplacer pour le balayage ;
commander le composant capteur (1714) pour balayer l'objet à balayer en adoptant le mode de balayage ;
obtenir un résultat de balayage ;
générer des données d'impression 3D en fonction du résultat de la numérisation ; et
commander le composant de communication (1716) pour envoyer, selon un élément d'opération sélectionné, les données d'impression 3D à un dispositif d'exploitation correspondant à l'élément d'opération.

9. Le système de la revendication 8, dans lequel le au moins un des capteurs dans les lunettes intelligentes comprend :
un capteur infrarouge, un capteur d'image et un capteur à ultrasons.

10. Le système de la revendication 8 ou 9, dans lequel le processeur est en outre configuré pour commander le composant de communication (1716) pour :
lorsque l'élément d'opération sélectionné est l'impression 3D, envoyer les données d'impression 3D à une imprimante 3D via BlueTooth, BT ou un réseau local sans fil ;
lorsque l'élément d'opération sélectionné est le partage de données, envoyer les données d'impression 3D à un terminal participant au partage de données par le biais du BT, du réseau local sans fil ou du logiciel de messagerie instantanée ; et
lorsque l'élément d'opération sélectionné est le stockage en nuage, télécharger les données d'impression 3D vers un serveur en nuage pour le stockage, pour permettre aux données d'impression 3D d'être acquises à partir du serveur en nuage pour l'impression, le téléchargement ou le partage hors site.

11. Programme informatique comprenant des instructions pour exécuter les étapes d'un procédé de communication selon l'une quelconque des revendications 1 à 3 lorsque ledit programme est exécuté par un ordinateur situé dans des lunettes intelligentes.
